Europäisches Patentamt

European Patent Office

Office européen des brevets

(11) Publication number: **0 263 661 B1**

# EUROPEAN PATENT SPECIFICATION

(45) Date of publication of patent specification: **15.01.92**　(51) Int. Cl.⁵: **B31D 3/02**

(21) Application number: **87308800.9**

(22) Date of filing: **05.10.87**

(54) **Treating structural cellular materials.**

(30) Priority: **06.10.86 GB 8623941**

(43) Date of publication of application:
**13.04.88 Bulletin　88/15**

(45) Publication of the grant of the patent:
**15.01.92 Bulletin　92/03**

(84) Designated Contracting States:
**AT BE CH DE ES FR GB GR IT LI LU NL SE**

(56) References cited:
**GB-A- 783 362**
**US-A- 3 139 369**
**US-A- 3 166 838**
**US-A- 3 510 381**

(73) Proprietor: **DUFAYLITE DEVELOPMENTS LIMITED**
**Cromwell Road**
**St. Neots Cambridgeshire PE19 1OW(GB)**

(72) Inventor: **Thwaites, Peter John**
**3 Meadow View**
**Eltisley Cambridgeshire, PE19 4TP(GB)**
Inventor: **Josephson, Carl**
**Norra Varalov 4900**
**S-26200 Ängelholm(SE)**

(74) Representative: **Gallafent, Richard John et al**
**GALLAFENT & CO. 8 Staple Inn**
**London WCIV 7OH(GB)**

EP 0 263 661 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the treatment of structural cellular materials, particularly in connection with the manufacture of honeycomb filled panels.

Honeycomb filled panels are used in a wide variety of applications. They consist generally of two sheets of facing material and, sandwiched between the two sheets of facing material and filling the interspace between them, an expanded structural cellular material, e.g. honeycomb material. The honeycomb is conventionally formed of card or like material and is adhered to the inwardly facing faces of the two sheets of facing material. The panel may include, if desired, one or more edge members located between the sheets of facing material.

A major use of such panels is as doors, consisting of two sheets of facing material, four edge members, and a cellular filling.

The structural cellular material used is conventionally made of card and, until it is adhered in position between the two sheets of facing material, is a relatively unstable material dimensionally. It also takes up a lot of space in its expanded form and is accordingly normally manufactured and stored in unexpanded form and expanded just prior to use. Machinery for effecting such expansion is known and is described, for example, in GB-A-1355642 and GB-A-1596848.

The machinery for effecting expansion relies on the physical properties of the material from which the structural cellular material is made, which is most commonly card stock. Such card stock can take a permanent set or crease when appropriately manipulated. In the machinery, as explained in the above specifications, the unexpanded material in its "as manufactured" state is pulled out in an expansion direction to a degree sufficient to give a permanent set to the card, so that from a dimensionally unstable unexpanded form, there is produced a relatively dimensionally stable expanded cellular unit. It is still capable of being compressed or expanded in any direction in the general plane of the expanded unit, but does not tend elastically to return to the unexpanded state.

Conventionally such machinery has an output table or conveyor onto which such an expanded stabilised piece of honeycomb material is ejected and from which it is then manually removed.

In order to produce a panel, a piece of such expanded stabilised honeycomb material is taken from the output table and placed on top of one of the two outer sheets. The second outer sheet is then placed on top of the stabilised honeycomb unit, and the assembly compressed together, optionally with the application of heat, to consolidate the unit and cure or dry the adhesive. The adhesive is conventionally provided on the sheets, though it is known to apply adhesive to the edges of the cells of the stabilised expanded honeycomb material.

The manual operation of placing the material in position is time consuming and requires skilled labour. Even if the panels have edge members, so that the honeycomb needs only to be placed in a tray formed by the edge members and one facing sheet, the operation is labour intensive.

Mechanical means for producing honeycomb cored panels are known and are described, for example, in GB-A-783362 and US-A-3139369 and 3510381. GB-A-783362 and US-A-3139369 both disclose making cellular fill panels by means including moving one of the outer skins along a conveyor, coating it with glue, moving the honeycomb material in a direction transverse to the conveyor to a position on top of the outer skin and moving a glued second outer skin in a direction transverse to the conveyor to a position on the honeycomb. This takes up a lot of space.

US-A-3510381 describes a likewise space consumptive arrangement of two adjacent conveyors. A glued top panel is moved along by one conveyor, and transferred across to a double deck conveyor on which it is assembled with a honeycomb core on top of a bottom panel.

US-A-3166838 discloses a method of securing a sheet of flexible material, e.g. waterproof paper, to one side of a relatively thin sheet of expanded metal without the use of adhesive. The sheet is introduced from above the cellular expanded metal sheet, and pieces of the expanded metal are punched out and bent over to hold the sheet on.

In one aspect, the present invention provides apparatus for the treatment of unexpanded structural cellular material comprising a first conveyor for feeding a sequence of sheets through the apparatus, an expander unit in which the unexpanded structural cellular material is expanded, and a second conveyor which feeds unexpanded material to the expander unit and a combining station through which the sheets are conveyed on the first conveyor in a straight line and in which the expanded material is fed at an acute angle onto the sheets and which further includes a rotatably driven brush, for combining the expanded material with the sheets, the peripheral speed of the brush being substantially equal to the linear speed of the first conveyor, and including synchronizing means provided for synchronizing the combination of the expanded material with the sheets.

In a further aspect of the present invention there is provided apparatus for the treatment of unexpanded structural cellular material, e.g. for the manufacture of panels, which apparatus includes a first conveyor adapted to pass a sequence of sheets of material through a combining station in a straight line, a second conveyor upstream and above the combining station adapted to feed unexpanded structural cellular material to an expander unit located above the first conveyor, the outfeed from the expander unit including a cutter adapted to cut expanded structural cellular material into sections and positioned just above the first conveyor, and adapted to feed such expanded material at an acute angle on to a sheet conveyed by the first conveyor, and, at the combining station, a brush for combining a piece of expanded cellular material with the sheets of material, and rotatably drivable such that its peripheral speed at least substantially matches the linear speed of the first conveyor, and the apparatus including means for synchronizing the movement of the series of sheets along the first conveyor with the operation of the expander unit and its cutter whereby to synchronize the arrival of a leading edge of a piece of expanded cellular material emerging from the expander unit relative to the leading edge of the sheet and to cut the expanded material at a point such that the length of expanded material corresponds to the length of the sheet measured in the direction of movement of the first conveyor.

Apparatus operating in this way enables honeycomb material shipped and stored in unexpanded form to be expanded, cut into sections of appropriate size and those sections located relative to a facing sheet in one continuous operation. The apparatus may include a further station downstream of the combining station at which a second sheet is applied to the top of the expanded material, the sandwich assemblies so formed then being stacked compressed and dried or cured to form the final panels.

The brush, which preferably extends over the whole width of the first conveyor, is preferably a fairly stiff bristle brush, e.g. of fairly stiff nylon bristles, and is preferably of diameter 4 to 10 times the thickness of the expanded material.

The angle at which the expanded cellular material is fed onto the sheet from the expander unit, which generally conveniently corresponds to the angle between the second conveyor and the first conveyor, is preferably within the range of 20 to 35˚, most preferably about 30˚.

The preferred way of ensuring synchronism between the production of the expanded material and the arrival of a sheet at the combining station is to provide a trip switch on the first conveyor operated by the leading edge of the sheet as it comes towards the combining station. By appropriately positioning this upstream of the combining station, it can be ensured that the expanded material and the sheet are combined appropriately together.

The sheets conveyed by the first conveyor may be plain, or they may have one or more upstanding edge members thereon. For example, for making doors, each sheet may have four edge members, the sheet and the edge members constituting a tray into which the expanded structural cellular material section is placed.

The invention is illustrated by way of example with reference to the accompanying drawings in which:

Figure 1 is a diagrammatic side view of apparatus in accordance with the present invention,

Figure 2 is a diagrammatic front view of the honeycomb expander and cutter unit shown in Figure 1,

Figure 3 is a side view of the expander and cutter unit shown in Figure 2, and

Figure 4 is a general arrangement drawing showing the overall sequence of operations.

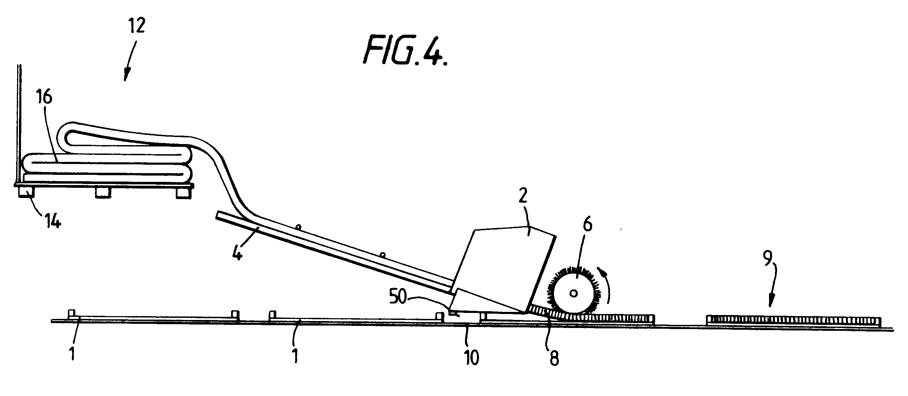

Referring initially to Figure 4, trays 1, each formed of a frame and base sheet, are fed sequentially along a main conveyor 10. They pass below a honeycomb storage area denoted 12 on which e.g. a pallet 14 may be placed carrying a sinuous stack of unexpanded honeycomb material 16. They then pass under an expander and cutter unit 2 having an infeed table 4, an expansion section and a cutter (both not shown). Expanded honeycomb sections emerge from the unit 2 at an angle and just above the main conveyor 10. Immediately downstream of the unit 2, a rotary brush 6 is provided. The brush 6 acts to combine together a piece of expanded honeycomb material 8 which is coming from the expander and a tray 1 which passes through the combining station. The filled tray 9 then passes further along the conveyor to a position in which a sheet of e.g. plywood is placed on top of it and a stack of the items so formed then passes to an appropriate station for compression and curing.

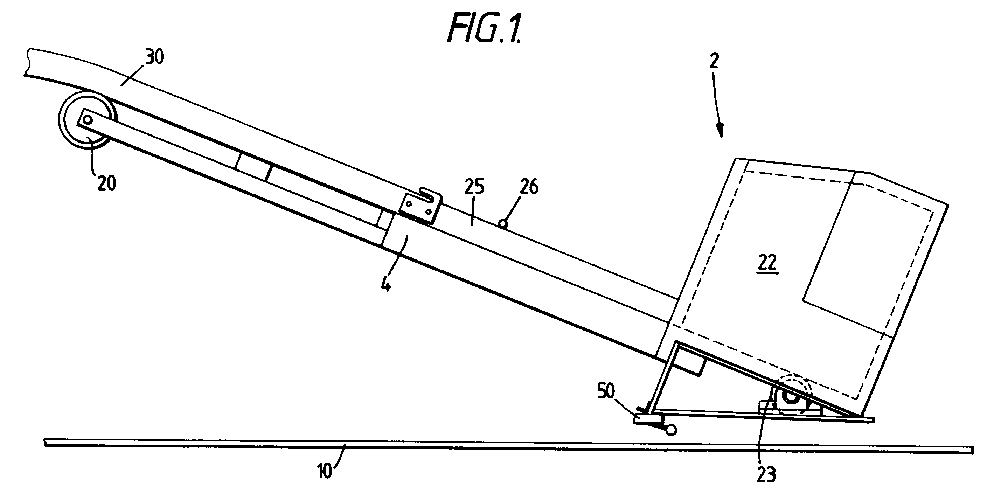

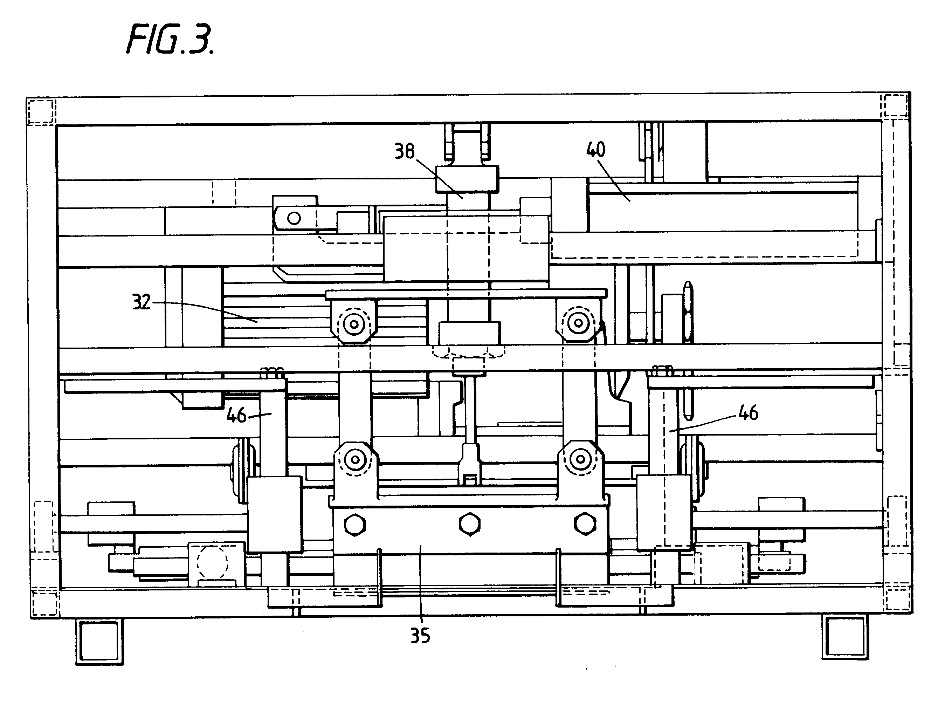

Referring now in detail to Figure 1, this shows the expander and cutter unit 2 in diagrammatic side view. It consists basically of an inclined infeed table 4 having at its upstream end a roller 20 over which unexpanded material may pass, and a driving and cutting section 22 including a pair of opposed rollers 23,24 (only roller 23 being shown) which engage the bottom and top side of the honeycomb material respectively and pull it down the infeed table 4 and push it out via an outlet orifice located just above the main conveyor. Mounted on the infeed table 4 in known fashion is a pair of fences 25 which define a V-shape tapering towards a narrow throat just upstream of the pair of drive rollers 23,24. One or more freely rotatable captive bars 26 rests on the top of the honeycomb material 30 as it moves down the table to impart stability. The honeycomb is compressed transversely to its expansion direction as it passes down the table, and as it passes through the throat the material acquires adequate permanent set such that when the material emerges from the throat, it expands laterally to give a web 8 of stabilised expanded honeycomb material. A pneumatically operated guillotine blade 35 (see Figure 3) is located at the outlet. This is actuated at an appropriate time to chop off a section of the expanded material. This time is chosen such that the rear end of the section of material so formed coincides with the rear end of the tray cavity.

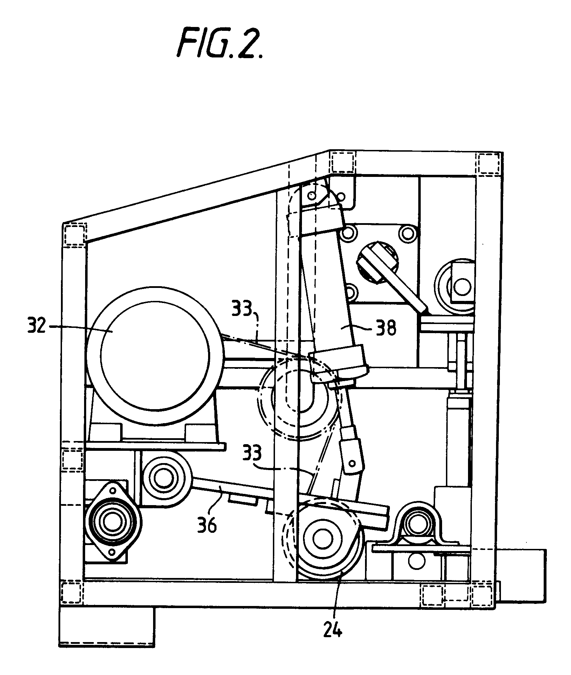

Referring to Figures 2 and 3, the internal structure of the feed and cutter mechanism is shown. The feed is driven by an electric motor 32 connected via a chain drive 33 to one of the two drive rollers. The upper drive roller 24 is mounted on a frame 36 which can be swung by a first hydraulic cylinder 38 from the downward position shown in Figure 2 to an upper position in which the upper roller 24 is spaced from the lower roller 23 sufficiently to enable the leading edge of honeycomb to be passed through the gap when setting up.

A second hydraulic cylinder 40 operates, via a series of crank arms, the guillotine blade 35 which is set to reciprocate vertically on a pair of pillars 46 and to cut off the expanded honeycomb material when desired. Operation in synchronism with the feed of trays 1 is effected by means of a tripswitch 50 connected to appropriate control mechanisms.

**Claims**

1. Apparatus for the treatment of unexpanded structural cellular material comprising a first conveyor (10) for feeding a sequence of sheets (1) through the apparatus, an expander unit (2) in which the unexpanded structural cellular material (30) is expanded, and a second conveyor (4) which feeds unexpanded material to the expander unit, and a combining station through which the sheets (1) are conveyed on the first conveyor (10) in a straight line and in which the expanded material (8) is fed at an acute angle onto the sheets (1) and which further includes a rotatably driven brush (6), for combining the expanded material (8) with the sheets (1), the peripheral speed of the brush (6) being substantially equal to the linear speed of the first conveyor (10), and including synchronising means (50) provided for synchronizing the combination of the expanded material (8) with the sheets (1).

2. Apparatus according to claim 1, and characterised by a cutter (35) for cutting the expanded structural cellular material into lengths corresponding to the length of the sheets (1) measured in the direction of movement of the first conveyor (10).

3. Apparatus according to claim 2, characterised in that the synchronizing means (50) is a tripswitch attached to the expander unit (2) which operates the cutter (35) on the arrival of a leading edge of a sheet (1) under the unit (2).

4. Apparatus according to claim 2 or 3, wherein the cutter (35) is actuated by a hydraulic cylinder (40) via a series of crank arms, the cutter reciprocating vertically on a pair of pillars (46).

5. Apparatus according to any one of claims 1 to 4, wherein the brush (6) extends over the whole width of the first conveyor (10), and is a bristle brush having a diameter of between four and ten times the thickness of the expanded material.

6. Apparatus according to any one of claims 1 to 5, wherein the expanded mateerial (8) is fed onto the sheets (1) from the expander unit (2) at an angle in the range of 20$^\circ$ to 35$^\circ$.

7. Apparatus according to claim 6, wherein the angle is about 30$^\circ$.

8. Apparatus according to claim 6 or 7, wherein the angle corresponds to the angle between the first conveyor (10) and the second conveyor (4).

9. Apparatus according to any one of claims 1 to 8, wherein the sheets (1) are plain.

10. Apparatus according to any one of claims 1 to 8, wherein the sheets (1) having one or more upstanding edge members.

11. Apparatus according to any one of the preceding claims, wherein the expander unit (2) includes drive means (23,24).

12. Apparatus according to claim 11, wherein the drive means (23,24) comprise two rollers, one of which is driven by an electric motor (32) via a chain drive (33).

13. Apparatus according to any one of the preceding claims, including a further station downstream of the combining station at which a second sheet is applied to the top of the expanded material (8), the sandwich assemblies so formed then being stacked compressed and dried or cured to form the final panels.

14. Apparatus for the treatment of unexpanded structural cellular material, e.g. for the manufacture of panels, which apparatus includes a first conveyor (10) adapted to pass a sequence of sheets (1) of material through a combining station in a straight line, a second conveyor (4) upstream and above the combining station adapted to feed unexpanded structural cellular material to an expander unit (2) located above the first conveyor (10), the outfeed from the expander unit including a cutter (35) adapted to cut expanded structural cellular material into sections and positioned just above the first conveyor (10), and adapted to feed such expanded material at an acute angle on to a sheet (1) conveyed by the first conveyor, and, at the combining station, a brush (6) for combining a piece of expanded cellular material (8) with the sheets (1) of material and rotatably drivable such that its peripheral speed at least substantially matches the linear speed of the first conveyor (10), and the apparatus including means (50) for synchronizing the movement of the series of sheets along the first conveyor (10) with the operation of the expander unit (2) and its cutter whereby to synchronize the arrival of a leading edge of a piece of expanded cellular material (8) emerging from the expander unit (2) relative to the leading edge of the sheet and to cut the expanded material at a point such that the length of expanded material corresponds to the length of the sheet measured in the direction of movement of the first conveyor (10).

**Revendications**

1. Appareil de traitement d'un matériau cellulaire résistant non expansé, comprenant un premier transporteur (10) destiné à faire avancer une séquence de feuilles (1) dans l'appareil, un ensemble expanseur (2) dans lequel le matériau cellulaire résistant non expansé (30) est expansé, et un second transporteur (4) qui fait avancer le matériau non expansé vers l'ensemble expanseur, et un poste de combinaison dans lequel les feuilles (1) sont transportées sur le premier transporteur (10) en ligne droite et dans lequel le matériau expansé (8) avance en formant un angle aigu vers les feuilles (1), et qui comporte en outre une brosse (6) entraînée en rotation et destinée à combiner le matériau expansé (8) aux feuilles (1), la vitesse périphérique de la brosse (6) étant pratiquement égale à la vitesse linéaire du premier transporteur (10), et comprenant un dispositif (50) de synchronisation destiné à synchroniser la combinaison du matériau expansé (8) et des feuilles (1).

2. Appareil selon la revendication 1, caractérisé par un organe (35) destiné à couper le matériau cellulaire résistant expansé en tronçons correspondant à la longueur des feuilles (1), mesurée dans la direction de déplacement du premier transporteur (10).

3. Appareil selon la revendication 2, caractérisé en ce que le dispositif de synchronisation (50) est un interrupteur déclenché fixé à l'ensemble expanseur (2) et qui commande l'organe de coupe (35) à l'arrivée d'un bord antérieur d'une feuille (1) sous l'ensemble (2).

4. Appareil selon la revendication 2 ou 3, dans lequel l'organe de coupe (35) est manoeuvré par un vérin hydraulique (40) par l'intermédiaire d'une série de bras de manivelle, l'organe de coupe se déplaçant verticalement en translation sur une paire de montants (46).

5. Appareil selon l'une quelconque des revendications 1 à 4, dans lequel la brosse (6) est placée sur toute la largeur du premier transporteur (10), et est formée d'une brosse constituée de soies et ayant un diamètre compris entre quatre et dix fois l'épaisseur du matériau expansé.

6. Appareil selon l'une quelconque des revendications 1 à 5, dans lequel le matériau expansé (8) avance sur les feuilles (1) à partir de l'ensemble expanseur (2) suivant un angle compris entre 20 et 35°.

7. Appareil selon la revendication 6, dans lequel l'angle est d'environ 30°.

8. Appareil selon la revendication 6 ou 7, dans lequel l'angle correspond à l'angle formé par le premier transporteur (10) et le second transporteur (4).

9. Appareil selon l'une quelconque des revendications 1 à 8, dans lequel les feuilles (1) sont planes.

10. Appareil selon l'une quelconque des revendications 1 à 8, dans lequel les feuilles (1) ont un ou plusieurs organes de bordure qui en dépassent.

11. Appareil selon l'une quelconque des revendications précédentes, dans lequel l'ensemble expanseur (2) comporte un dispositif d'entraînement (23, 24).

**12.** Appareil selon la revendication 11, dans lequel le dispositif d'entraînement (23, 24) comporte deux rouleaux dont l'un est entraîné par un moteur électrique (32) par l'intermédiaire d'une transmission à chaîne (33).

**13.** Appareil selon l'une quelconque des revendications précédentes, comprenant un poste supplémentaire placé en aval du poste de combinaison et auquel une seconde feuille est appliquée sur le matériau expansé (8), les ensembles sandwichs ainsi formés étant alors empilés, comprimés et séchés ou durcis afin que les panneaux finaux soient formés.

**14.** Appareil de traitement d'un matériau cellulaire résistant non expansé, par exemple destiné à la fabrication de panneaux, l'appareil comprenant un premier transporteur (10) destiné à faire passer une séquence de feuilles (1) d'un matériau à un poste de combinaison en ligne droite, un second transporteur (4) placé en amont du poste de combinaison et au-dessus de celui-ci et destiné à faire avancer le matériau cellulaire résistant non expansé vers un ensemble expanseur (2) placé au-dessus du premier transporteur (10), la sortie de l'ensemble expanseur comprenant un organe de coupe (35) destiné à couper le matériau cellulaire résistant expansé en tronçons et placé juste au-dessus du premier transporteur (10), et étant destiné à faire avancer le matériau expansé suivant une direction faisant un angle aigu vers une feuille (1) transportée par le premier transporteur et, au poste de combinaison, une brosse (6) destinée à combiner un morceau du matériau cellulaire expansé (8) aux feuilles (1) du matériau et destinée à être entraînée en rotation de manière que sa vitesse périphérique corresponde au moins pratiquement à la vitesse linéaire du premier transporteur (10), et l'appareil comporte un dispositif (50) destiné à synchroniser le mouvement de la série de feuilles le long du premier transporteur (10) sur le fonctionnement de l'ensemble expanseur (2) et de son organe de coupe de manière que l'arrivée du bord antérieur d'un morceau de la matière cellulaire expansée (8) quittant l'ensemble expanseur (2) soit synchronisée par rapport au bord antérieur de la feuille et que le matériau expansé soit découpé à un emplacement tel que la longueur du matériau expansé correspond à la longueur de la feuille mesurée dans la direction de déplacement du premier transporteur (10).

**Patentansprüche**

**1.** Vorrichtung zum Behandeln eines nicht-expandierten Konstruktions-Zellenmaterials mit einem ersten Förderer (10) zum Befördern einer Folge von Bögen (1) durch die Vorrichtung, einer Expandiereinheit (2), in der das nicht-expandierte Konstruktionszellenmaterial (30) expandiert wird, und einem zweiten Förderer (4), der nicht-expandiertes Material zur Expandiereinheit befördert, und einer Vereinigungsstation, durch die Bögen (1) auf dem ersten Förderer (10) in einer geraden Linie hindurchbefördert werden und in der das expandierte Material (8) unter einem spitzen Winkel auf die Bögen (1) befördert wird und die ferner eine drehbar angetriebene Bürste (6) zum Vereinigen des expandierten Materials (8) mit den Bögen (1) aufweist, wobei die Umfangsgeschwindigkeit der Bürste (6) weitgehend gleich der Vorschubgeschwindigkeit des ersten Förderers (10) ist, und mit einem Synchronisiermittel (50) zum Synchronisieren der Vereinigung des expandierten Materials (8) mit den Bögen (1).

**2.** Vorrichtung nach Anspruch 1, gekennzeichnet durch ein Schneidwerkzeug (35) zum Zerschneiden des expandierten Konstruktions-Zellenmaterials in Abschnitte, deren Lange der in Richtung der Bewegung des ersten Förderers (10) gemessenen Länge der Bögen (1) entspricht.

**3.** Vorrichtung nach Anspruch 2, dadurch gekennzeichnet, daß das Synchronisiermittel (50) ein an der Expandiereinheit (2) angebrachter Auslöseschalter ist, der das Schneidwerkzeug (35) beim Eintreffen einer Vorderkante eines Bogens (1) unter der Einheit (2) betätigt.

**4.** Vorrichtung nach Anspruch 2 oder 3, bei der das Schneidwerkzeug (35) durch einen hydraulischen Zylinder (40) über eine Folge von Kurbelarmen betätigt wird, wobei das Schneidwerkzeug vertikal auf zwei Säulen (46) hin- und herbewegt wird.

**5.** Vorrichtung nach einem der Ansprüche 1 bis 4, bei der die Bürste (6) sich über die gesamte Breite des ersten Förderers (10) erstreckt und eine Borsten-Bürste mit einem Durchmesser ist, der zwischen dem vier- und zehnfachen der Dicke des expandierten Materials liegt.

**6.** Vorrichtung nach einem der Ansprüche 1 bis 5, bei der das expandierte Material (8) aus der Expandiereinheit (2) auf die Bögen (1) unter einem Winkel im Bereich von 20° bis 35° befördert wird.

7. Vorrichtung nach Anspruch 6, bei der der Winkel etwa 30° beträgt.

8. Vorrichtung nach Anspruch 6 oder 7, bei der der Winkel dem Winkel zwischen dem ersten Förderer (10) und dem zweiten Förderer (4) entspricht.

9. Vorrichtung nach einem der Ansprüche 1 bis 8, bei der die Bögen (1) eben sind.

10. Vorrichtung nach einem der Ansprüche 1 bis 8, bei der die Bögen (1) ein oder mehrere hochstehende Randteile aufweisen.

11. Vorrichtung nach einem der vorstehenden Ansprüche, bei der die Expandiereinheit (2) Antriebsmittel (23, 24) aufweist.

12. Vorrichtung nach Anspruch 11, bei der die Antriebsmittel (23, 24) zwei Rollen aufweisen, von denen die eine durch einen Elektromotor (32) über einen Kettentrieb (33) angetrieben wird.

13. Vorrichtung nach einem der vorstehenden Ansprüche, mit einer weiteren Station stromunterhalb der Vereinigungsstation, in der ein zweiter Bogen oben auf dem expandierten Material (8) aufgebracht wird, wonach die so gebildeten Sandwich-Anordnungen gestapelt, zusammengepreßt und getrocknet oder gehärtet werden, um die fertigen Platten zu bilden.

14. Vorrichtung zum Behandeln von nicht-expandiertem Konstruktions-Zellenmaterial, z.B. zum Herstellen von Platten, mit einem ersten Förderer (10), durch den eine Folge von Bögen (1) aus Material in gerader Linie durch eine Vereinigungsstation beförderbar ist, einem zweiten Förderer (4) stromoberhalb und über der Vereinigungsstation, durch den nicht-expandiertes Konstruktions-Zellenmaterial zu einer Expandiereinheit (2), die oberhalb des ersten Förderers (10) angeordnet ist, beförderbar ist, wobei der Ausgang der Expandiereinheit ein Schneidwerkzeug (35) aufweist, durch das expandiertes Konstruktions-Zellenmaterial in Abschnitte zerschneidbar ist und das unmittelbar über dem ersten Förderer (10) angeordnet ist und durch das derart expandierte Material unter einem spitzen Winkel auf einen durch den ersten Förderer beförderten Bogen (1) beförderbar ist, und mit einer Bürste (6) in der Vereinigungsstation zum Vereinigen eines Abschnitts des expandierten Zellenmaterials (8) mit den Materialbögen (1) und die derart drehantreibbar ist, daß ihre Umfangsgeschwindigkeit wenigstens weitgehend mit der Vorschubgeschwindigkeit des ersten Förderers (10) übereinstimmt, und wobei die Vorrichtung ein Mittel (50) zum Synchronisieren der Bewegung der Folge von Bögen längs des ersten Förderers (10) mit dem Betrieb der Expandiereinheit (2) und ihrem Schneidwerkzeug aufweist, so daß das Eintreffen einer Vorderkante eines Abschnitts des expandierten Zellenmaterials (8), das aus der Expandiereinheit (2) austritt, relativ zu der Vorderkante des Bogens synchronisiert und das expandierte Material an einer solchen Stelle zerschnitten wird, daß die Länge des expandierten Materials der in Richtung der Bewegung des ersten Förderers (10) gemessenen Länge des Bogens entspricht.

FIG.1.

# FIG.2.

# FIG.3.

EP 0 263 661 B1

FIG.4.

EP 0 263 661 B1